# EUROPÄISCHE PATENTSCHRIFT

(11) **EP 1 808 669 B1**
(45) Veröffentlichungstag und Bekanntmachung des Hinweises auf die Patenterteilung: **26.03.2008**
(21) Anmeldenummer: 06025557.7
(22) Anmeldetag: 11.12.2006
(51) Int. Cl.: G01B 11/25

(54) **Einrichtung und Verfahren zum dreidimensionalen optischen Vermessen**
Device and method for three dimensional optical measuring
Dispositif et procédé destinés à la mesure optique en trois dimensions

(30) Priorität: 13.01.2006 DE 102006002077
(43) Veröffentlichungstag der Anmeldung: 18.07.2007
(73) Patentinhaber: GOM, 38106 Braunschweig (DE)
(72) Erfinder: Gomeric, Mladen, Dr., 38102 Braunschweig (DE); Winter, Detlef, Dr., 38533 Vordorf (DE); Reiß, Sebastian, 38159 Vechelde (DE)
(74) Vertreter: Gerstein, Hans Joachim

(56) Entgegenhaltungen:
- EP-B1- 0 766 906
- DE-A1- 4 115 445
- US-A- 5 307 152

## Beschreibung

Die Erfindung betrifft eine Einrichtung zum dreidimensionalen optischen Vermessen von Objekten mit einem topometrischen Messverfahren, bei dem Bilder von auf ein Objekt projizierten Projektionsmustern aufgenommen und ausgewertet werden, wobei die Einrichtung einen Projektor mit einer Lichtbogenlampe als Lichtquelle, eine Bildaufnahmeeinheit und eine Bildauswerteeinheit hat.

Die Erfindung betrifft weiterhin ein Verfahren zum dreidimensionalen optischen Vermessen von Objekten mit einem topometrischen Messverfahren, bei dem Bilder von mit einem Projektor auf ein Objekt projizierten Projektionsmustern mit einer Bildaufnahmeeinheit aufgenommen und mit einer Bildauswerteeinheit ausgewertet werden, wobei als Lichtquelle des Projektors eine Lichtbogenlampe verwendet wird.

Die dreidimensionale optische Erfassung von Objektoberflächen mittels optischer Triangulationssensoren nach dem Prinzip der Topometrie ist hinreichend bekannt. Hierbei werden zum Beispiel unterschiedliche Streifenmuster auf das zu vermessende Objekt projiziert, von einer oder mehreren Kameras beobachtet und anschließend rechnergestützt ausgewertet. Die Auswerteverfahren sind zum Beispiel das Phasen-Shift-Verfahren, der codierte Lichtansatz oder das Heterodyn-Verfahren.

Die Grundlagen und praktischen Anwendungen solcher topometrischer Messverfahren werden beispielsweise in Bernd Breuckmann: "Bildverarbeitung und optische Messtechnik in der industriellen Praxis", 1993, Franzis-Verlag GmbH, München ausführlich beschrieben.

In Reinhard W. Malz: "Codierte Lichtstrukturen für 3-D-Messtechnik und Inspektion", Berichte aus dem Institut für Technische Optik der Universität Stuttgart, Januar 1992, werden verschiedene Vorrichtungen beschrieben, mit denen derartige Messaufbauten realisiert werden können.

Die Güte der Messergebnisse bei der dreidimensionalen optischen Vermessung von Objekten mittels Streifenprojektion ist stark vom Kontrast der Projektion zum Umgebungslicht abhängig.

US 5,307,152 A offenbart ein interferometrisches Moire-System zum dreidimensionalen optischen Vermessen von Objekten mit einem topometrischen Messverfahren, bei dem phasenverschobene Moire-Muster mit einem Projektor auf ein Objekt projiziert und die aufgenommenen Bilder des Objekts mit den Mustern ausgewertet werden. Als Lichtquelle wird eine Lichtbogenlampe eingesetzt.

Durch die Nutzung eines Projektors mit Lichtbogenlampe kann die Lichtintensität im Vergleich zu herkömmlichen Projektoren erheblich vergrößert und die Messgenauigkeit verbessert werden. Unter entsprechenden Umgebungsbedingungen sind unter Umständen überhaupt erst topometrische Messungen möglich.

Lichtbogenlampen sind an sich seit langem bekannt und werden zum Beispiel in Kinoprojektoren oder Scheinwerfern (Flutlichtanlage, Leuchtturm) eingesetzt. Sie haben einen sehr hohen Wirkungsgrad und ermöglichen damit hohe Lichtausbeuten. Aufgrund ihres kleinen, hellen Leuchtflecks (Lichtbogen) weisen sie besonders gute Fokussier-Eigenschaften auf, wodurch sie für den Einsatz in Projektoren besonders geeignet sind.

Derartige Lichtbogenlampen haben aber den Nachteil, dass sie geregelt werden müssen. Die beiden Elektroden der Lichtbogenlampe werden kontinuierlich umgepolt, zum Beispiel mit 50 bis 200 Hz. Die zum dreidimensionalen optischen Vermessen von Objekten mit einem topometrischen Messverfahren angewandten Messverfahren, wie zum Beispiel das Phasen-Shift-Verfahren, fordern aber, dass sich die Lichtintensität des Projektors während einer Messung mindestens zwischen zwei Einzelbildern nicht ändert. Je nachdem, wie viele derartige Umpolungen nun in die Belichtungszeit fallen, kann es zu Helligkeitsschwankungen von Bild zu Bild kommen.

Zusätzlich springt der Lichtbogen teilweise unkontrolliert zu nicht vorhersehbaren Zeiten. Durch dieses Bogenspringen kommt es zu unvorhergesehenen Schwankungen in der Gesamthelligkeit und Helligkeitsverteilung des ausgestrahlten Lichtes.

Aus der EP 0 766 096 B1 ist ein Verfahren bekannt, den unkontrolliert auftretenden Effekt des Lichtbogenspringens und die damit verbundenen unkontrollierbaren Veränderungen der Helligkeit zu vermeiden, indem die Lichtbogenlampe mit einem Wechselstrom betrieben wird, der kurz vor der Kommutierung einen zusätzlichen Impuls aufweist.

Durch diesen zusätzlichen Stromimpuls wird wiederum ein Lichtpuls erzeugt, wodurch auch mit diesem Verfahren beschriebene Lichtbogenlampen Helligkeitsschwankungen im Bild aufweisen können. Es können während der Belichtungszeit einer Einzelbildaufnahme unterschiedlich viele Lichtpulse auftreten, je nachdem, wo die Belichtungszeit im Stromstärkendiagramm, d.h. im Stromverlauf der Lichtbogenlampe über die Zeit, beginnt und wo sie endet. Hierdurch ist die Gleichmäßigkeit der Beleuchtungsstärke zweier Einzelbilder einer Messung unter Umständen nicht gewährleistet.

Aufgabe der vorliegenden Erfindung ist es daher, eine verbesserte Einrichtung zum dreidimensionalen optischen Vermessen von Objekten mit einem topometrischen Messverfahren zu schaffen, die bei Nutzung einer Lichtbogenlampe eine gleichmäßige Beleuchtungsstärke zweier Einzelbildern sicherstellt.

Die Aufgabe wird mit der Einrichtung der eingangs genannten Art dadurch gelöst, dass die Bildaufnahmeeinheit zur Synchronisation der Bildaufnahme und/oder Bildauswertung mit der Lichtintensität der Lichtbogenlampe eingerichtet ist.

Es wird daher vorgeschlagen, die Bildaufnahme mit der Lichtintensität der Lichtbogenlampe zu synchronisieren. Erst damit ist eine sinnvolle Nutzung einer Lichtbogenlampe als Projektor für topometrische Messungen sinnvoll möglich.

Als für die Erfindung und im Sinne der Erfindung einsetzbaren Lichtbogenlampen sind daher jegliche Lampen ausreichender Helligkeit zu verstehen, bei denen das Problem von Helligkeitsschwankungen besteht und die eine Problemlösung durch Synchronisation der Bildaufnahme und/oder Bildauswertung erlauben. Es sind dies vor allem Lampen mit sich periodisch wiederholenden nicht-konstanten Helligkeitsverläufen.

Die Synchronisation kann durch Triggerung des Belichtungszeitpunkts der Bildaufnahmeeinheit in Abhängigkeit von dem Helligkeitsverlauf der Lichtbogenlampe erfolgen. D.h., dass die Synchronisation der Bildaufnahme in Abhängigkeit von einem Triggersignal der Lichtbogenlampe erfolgt. Das Triggersignal kann elektrisch oder optisch übertragen werden.

Die Triggerung kann aber umgekehrt dadurch erfolgen, dass der Stromverlauf der Lichtbogenlampe über die Zeit durch ein Triggersignal der Bildaufnahmeeinheit so gesteuert wird, dass zum Zeitpunkt der Bildaufnahme durch die Bildaufnahmeeinheit eine definierte Helligkeit der Lichtbogenlampe eingestellt wird.

Es ist aber auch denkbar, dass sowohl die Lichtbogenlampe, als auch die Bildaufnahmeeinheit mit einem externen Triggersignal aufeinander synchronisiert werden.

Möglich ist auch eine quasi Synchronisation der Bildauswertung. Die auftretenden Lichtschwankungen, deren Auswirkung unter Umständen nicht durch Synchronisation der Bildaufnahme ausgeglichen wurden, können anhand der bekannten Bildaufnahmezeiten und Lichtintensitätsverläufe mathematisch kompensiert werden. Hierzu ist die jeweilige (unsynchronisierte) Position der Belichtungszeit im Intensitätsverlauf der Lampe zu registrieren.

Aufgabe der Erfindung ist es weiterhin, ein verbessertes Verfahren zum dreidimensionalen optischen Vermessen von Objekten zu schaffen.

Die Aufgabe wird mit dem Verfahren der eingangs genannten Art gelöst durch Synchronisieren der Bildaufnahme und/oder Bildauswertung mit der Lichtintensität einer Lichtbogenlampe des Projektors.

Durch das Verfahren und die entsprechende Einrichtung wird sichergestellt, dass in den Belichtungszeiten aufeinander folgender Bildaufnahmen immer gleiche Kurvenanteile der Lichtintensitätskurve der Lichtbogenlampe durchlaufen werden, so dass zum Beispiel immer genau gleich viele Peaks bzw. Lichtintensitätsspitzen pro Bild vorliegen.

Die Festlegung des Startpunktes wird dabei zum Beispiel durch Triggern des Belichtungszeitpunktes der zur Beobachtung der aufprojizierten Lichtstrukturen eingesetzten Kamera durch die Lichtbogenlampe erreicht.

Besonders vorteilhaft ist es, wenn die Bildauswerteeinheit zur mathematischen Kompensation von bei aufeinander folgenden Bildaufnahmen auftretenden Unterschieden der Lichtintensität in Abhängigkeit von den zuvor registrierten Bildaufnahmezeitpunkten in dem Lichtintensitätsverlauf über die Zeit eingerichtet ist. Damit können durch die bekannte Position der Belichtungszeit in der Lichtintensitätskurve Änderungen der Lichtintensität ausgeglichen werden.

Die Erfindung wird nach folgend anhand der beigefügten Zeichnungen beispielhaft näher erläutert. Es zeigen:
- Figur 1 -: Skizze einer Einrichtung zum dreidimensionalen optischen Vermessen von Objekten;
- Figur 2 -: schematischer Strom-/Lichtintensitätsverlauf einer Lichtbogenlampe bei rechteckförmigem Stromverlauf mit zusätzlichem Impuls kurz vor der Kommutierung;
- Figur 3 -: schematische Darstellung des Lichtintensitätsverlaufs und der Bildaufnahme bei ungetriggertem Beleuchtungszeitpunkt für unterschiedliche Belichtungszeiten;
- Figur 4 -: schematische Darstellung des Lichtintensitätsverlaufs und der Bildaufnahme bei getriggertem Beleuchtungszeitpunkt für unterschiedliche Belichtungszeiten.

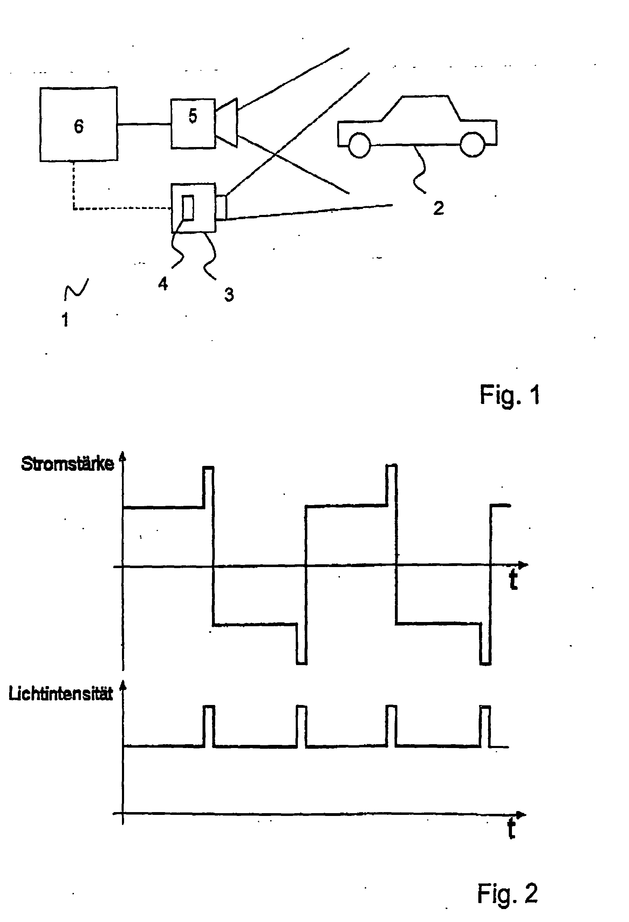

Die Figur 1 lässt eine schematische Darstellung einer Einrichtung 1 zum dreidimensionalen optischen Vermessen von Objekten 2 mit einem topometrischen Messverfahren erkennen. Die Einrichtung 1 hat einen Projektor 3 mit einer Lichtbogenlampe 4 zur Projektion von ausgewählten Projektionsmustern auf das Objekt 2. Durch die Lichtbogenlampe 4 wird eine relativ große Lichtintensität und damit ein im Vergleich zu herkömmlichen Messverfahren verbessertes Kontrastverhältnis erreicht. Als Lichtbogenlampe 4 kann beispielsweise eine Metalldampflampe o.ä. eingesetzt werden.

Weiterhin ist in an sich bekannter Weise eine Bildaufnahmeeinheit 5 in Form mindestens einer Kamera vorgesehen, die auf das Objekt 2 ausgerichtet und zur Aufnahme von Bildern des Objektes mit aufprojizierten Projektionsmustern eingerichtet ist. Die Bildaufnahmeeinheit 5 ist mit einer Bildauswerteeinheit 6 verbunden, um die aufgenommenen Bilder zur topometrischen Vermessung des Objektes 2 auszuwerten.

Die Bildauswerteeinheit 6 kann beispielsweise ein geeignet programmierter Computer sein. Die Verfahren zur topometrischen Bildauswertung sind hinreichend bekannt und werden nicht weiter erläutert.

Durch die Nutzung einer Lichtbogenlampe 4 für den Projektor 3 stellt sich das Problem, dass sich während einer Messung die Lichtintensität des Projektors 3 ändert.

Die Lichtintensität des Projektors 3 und die Bildaufnahmeeinheit 5 sind daher aufeinander so synchronisiert, dass die Helligkeitsverläufe aufeinander folgender Bildaufnahmen miteinander vergleichbar und vorzugsweise identisch sind.

Die Figur 2 lässt ein Diagramm des Stromstärkeverlaufs einer Lichtbogenlampe 4 über die Zeit erkennen. Der Stromverlauf ist nahezu rechteckförmig. Kurz vor der Kommutierung, d.h. der Umpolung der Stromrichtung, wird ein zusätzlicher Impuls aufgeprägt. Dies führt zu einem annährend konstanten Lichtintensitätsverlauf mit entsprechenden Impulsspitzen.

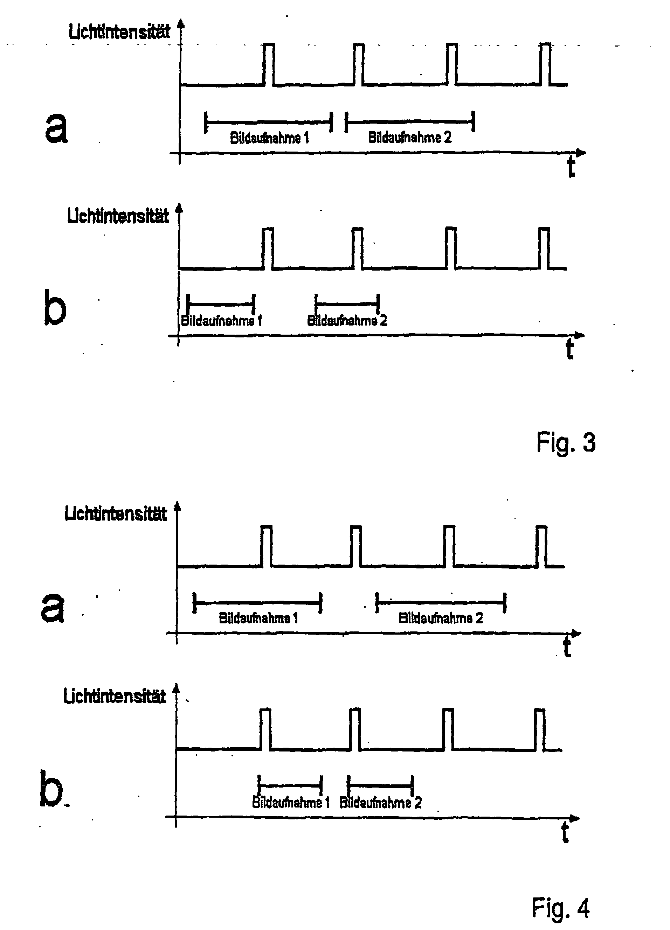

Die Figur 3a) lässt den Lichtintensitätsverlauf über die Zeit und zwei aufeinander folgende Bildaufnahmen 1 und 2 in den dargestellten Zeiträumen erkennen. Es wird deutlich, dass im Zeitraum der Bildaufnahme 1 ein Lichtintensitätsimpuls bzw. Peak und in den Zeitraum der Bildaufnahme 2 zwei Peaks fallen. Die Lichtintensität ist also in den beiden aufeinander folgenden Bildern unterschiedlich.

Die Figur 3b) lässt einen Lichtintensitätsverlauf ebenfalls mit zwei Bildaufnahmen über die Zeit erkennen. Es wird deutlich, dass zum Zeitraum der ersten Bildaufnahme 1 kein Lichtintensitätsimpuls bzw. Peak auftritt, während im Zeitraum der zweiten Bildaufnahme 2 ein Peak vorliegt. Auch hier ist die Lichtintensität für die beiden aufeinander folgenden Bildaufnahmen unterschiedlich.

Die Figur 4a) lässt eine Darstellung des Lichtintensitätsverlaufs über die Zeit wiederum mit zwei aufeinander folgenden Bildaufnahmen erkennen. Nunmehr ist die Bildaufnahme jedoch mit der Lichtintensität der Lichtbogenlampe synchronisiert, indem die Belichtungszeiten der einzelnen Bildaufnahmen und die Startzeitpunkte der Bildaufnahmen auf den Lichtintensitätsverlauf über die Zeit abgestimmt sind.

Es wird deutlich, dass in jedem Zeitraum der beiden Bildaufnahmen 1 und 2 jeweils ein Peak auftritt. Die Lichtintensität der einzelnen Bildaufnahmen ist daher miteinander vergleichbar.

Die Figur 4b) lässt ein Diagramm des Lichtintensitätsverlaufs über die Zeit mit zwei Bildaufnahmen 1 und 2 erkennen. Hier erfolgt der Start der Bildaufzeichnung zeitgleich mit dem vor der Kommutierung aufgeprägten Impuls des Stromverlaufs der Lichtbogenlampe 4. Die Zeitdauer der einzelnen Bildaufnahmen ist dabei so gewählt, dass die Bildaufnahme jeweils vor Auftreten der folgenden Kommutierung abgeschlossen ist.

Zur Synchronisation wird daher beispielsweise der vor der Kommutierung auf den Stromverlauf der Lichtbogenlampe aufgeprägte Stromimpuls genutzt.

## Patentansprüche

1. Einrichtung (1) zum dreidimensionalen optischen Vermessen von Objekten (2) mit einem topometrischen Messverfahren, bei dem Bilder von auf ein Objekt (2) projizierten Projektionsmustern aufgenommen und ausgewertet werden, wobei die Einrichtung einen Projektor (3) mit einer Lichtbogenlampe (4) als Lichtquelle, eine Bildaufnahmeeinheit (5) und eine Bildauswerteeinheit (6) hat, **dadurch gekennzeichnet, dass** die Bildaufnahmeeinheit (5) zur Synchronisation der Bildaufnahme und/oder der Bildauswerteeinheit mit der Lichtintensität der Lichtbogenlampe (4) eingerichtet ist.

2. Einrichtung (1) nach Anspruch 1, **dadurch gekennzeichnet, dass** die Bildaufnahmeeinheit (5) zur Synchronisation der Bildaufnahme in Abhängigkeit von einem Triggersignal der Lichtbogenlampe (4) eingerichtet ist.

3. Einrichtung (1) nach Anspruch 1 oder 2, **dadurch gekennzeichnet, dass** die Bildaufnahmeeinheit (5) und der Projektor (3) miteinander elektrisch verbunden und zur Synchronisation durch Triggerung des Stromverlaufs der Lichtbogenlampe (4) über die Zeit durch ein Triggersignal der Bildaufnahmeeinheit (5) eingerichtet sind.

4. Einrichtung (1) nach einem der Ansprüche 1 bis 3, **dadurch gekennzeichnet, dass** die Lichtbogenlampe (4) und die Bildaufnahmeeinheit (5) zur Synchronisation mit einem externen Triggersignal eingerichtet sind.

5. Einrichtung (1) nach einem der vorhergehenden Ansprüche, **dadurch gekennzeichnet, dass** die Bildauswerteeinheit (6) zur mathematischen Kompensation von Änderungen der Lichtintensität in Abhängigkeit von dem zuvor registrierten Bildaufnahmezeitpunkt in dem bekannten Lichtintensitätsverlauf über die Zeit eingerichtet ist.

6. Einrichtung (1) nach einem der vorhergehenden Ansprüche, **dadurch gekennzeichnet, dass** die Bildaufnahmeeinheit (5) aus mindestens einer Kamera besteht.

7. Verfahren zum dreidimensionalen optischen Vermessen von Objekten mit einem topometrischen Messverfahren, bei dem Bilder von mit einem Projektor (3) auf ein Objekt (2) projizierten Projektionsmustern mit einer Bildaufnahmeeinheit (5) aufgenommen und mit einer Bildauswerteeinheit (6) ausgewertet werden, wobei als Lichtquelle des Projektors (3) eine Lichtbogenlampe (4) verwendet wird, **gekennzeichnet durch** Synchronisieren der Bildaufnahme und/oder Bildauswertung mit der Lichtintensität der Lichtbogenlampe (4) des Projektors (3).

8. Verfahren nach Anspruch 7, **gekennzeichnet durch** Synchronisieren der Bildaufnahme in Abhängigkeit mit einem Triggersignal der Lichtbogenlampe (4).

9. Verfahren nach Anspruch 7 oder 8, **gekennzeichnet durch** Synchronisieren der Bildaufnahme **durch** Triggerung des Stromverlaufs der Lichtbogenlampe (4) über die Zeit **durch** ein Triggersignal der Bildaufnahmeeinheit (5).

10. Verfahren nach einem der Ansprüche 7 bis 9, **gekennzeichnet durch** Synchronisieren der Bildaufnahmeeinheit (5) mit der Lichtintensität der Lichtbogenlampe (4) in Abhängigkeit von einem externen Triggersignal für die Bildaufnahmeeinheit (5) und den Projektor (3).

11. Verfahren nach einem der Ansprüche 7 bis 10, **gekennzeichnet durch** mathematische Kompensation von Änderungen der Lichtintensität in Abhängigkeit von dem zuvor registrierten Bildaufnahmezeitpunkt in dem bekannten Lichtintensitätsverlauf über die Zeit.

## Claims

1. A device (1) for three-dimensional optical measurement of objects (2) using a topometric measurement method, in which images of projections patterns which have been projected onto an object (2) are recorded and evaluated, with the device having a projector (3) with an arc lamp (4) provided as a light source, an image recording unit (5) and an image evaluation unit (6), **characterized** that the image recording unit (5) is designed for synchronization of image recording and/or of the image evaluation unit with the light intensity of the arc lamp (4).

2. The device (1) as claimed in claim 1, **characterized in that** the image recording unit (5) is designed for synchronization of image recording as a function of a trigger signal of the arc lamp (4).

3. The device (1) as claimed in claim 1 or 2, **characterized in that** the image recording unit (5) and the projector (3) are electrically connected to one another and are designed for synchronization by triggering of the current waveform of the arc lamp (4) over time by means of a trigger signal of the image recording unit (5).

4. The device (1) as claimed in one of claims 1 to 3, **characterized in that** the arc lamp (4) and the image recording unit (5) are designed for synchronization with an external trigger signal.

5. The device (1) as claimed in one of the preceding claims, **characterized in that** the image evaluation unit (6) is designed for mathematical compensation for changes in the light intensity as a function of the previously recorded image recording time in the known light intensity profile over time.

6. The device (1) as claimed in one of the preceding claims, **characterized in that** the image recording unit(5) comprised at least one camera.

7. A method for three-dimensional optical measurement of objects using a topometric measurement method, in which images of projection patterns which have been projected onto an object (2) by a projector (3) are recorded by an image recording unit (5) and are evaluated by an image evaluation unit (6), wherein an arc lamp (4) is used as a light source for the projector (3),
**characterized by** synchronization of image recording and/or image evaluation with the light intensity of the arc lamp (4) of the projector (3).

8. The method as claimed in claim 7, **characterized by** synchronization of image recording as a function of a trigger signal of the arc lamp (4).

9. The method as claimed in claim 7 or 8, **characterized by** synchronization of image recording by triggering of the current waveform of the arc lamp (4) over time by means of a trigger signal of the image recording unit (5).

10. The method as claimed in one of claims 7 to 9, **characterized by** synchronization of the image recording unit (5) with the light intensity of the arc lamp (4) as a function of an external trigger signal for the image recording unit (5) and the projector (3).

11. The method as claimed in one of claims 7 to 10, **characterized by** mathematical compensation for changes in the light intensity as a function of the previously recorded image recording time in the known light intensity profile over time.

## Revendications

1. - Dispositif (1) pour la mesure optique en trois dimensions d'objets (2) au moyen d'un procédé de mesure topométrique, dans lequel des images de modèles de projection projetées sur un objet (2) sont prises et analysées, le dispositif ayant un projecteur (3) avec une lampe à arc (4) en tant que source de lumière, une unité de prise d'images (5) et une unité d'analyse d'images (6), **caractérisé en ce que** l'unité de prise d'images (5) est agencée pour la synchronisation de la prise d'images et/ou de l'analyse d'images avec l'intensité de la lumière de la lampe à arc (4).

2. - Dispositif (1) selon la revendication 1, **caractérisé en ce que** l'unité de prise d'images (5) est agencée pour la synchronisation de la prise d'images en fonction d'un signal de déclenchement de la lampe à arc (4).

3. - Dispositif (1) selon la revendication 1 ou 2, **caractérisé en ce que** l'unité de prise d'images (5) et le projecteur (3) sont reliés électriquement l'une à l'autre et sont agencés pour réaliser la synchronisation par déclenchement de l'évolution du courant de la lampe à arc (4) selon le temps au moyen d'un signal de déclenchement de l'unité de prise d'images (5).

4. - Dispositif (1) selon l'une des revendications 1 à 3, **caractérisé en ce que** la lampe à arc (4) et l'unité de prise d'images (5) sont agencées en vue de la synchronisation au moyen d'un signal de déclenchement extérieur.

5. - Dispositif (1) selon l'une des revendications précédentes, **caractérisé en ce que** l'unité d'analyse d'images (6) est agencée en vue de la compensation mathématique des modifications de l'intensité de la lumière en fonction de l'instant de la prise d'images précédente enregistrée au cours de l'évolution connue de l'intensité de la lumière en fonction du temps.

6. - Dispositif (1) selon l'une des revendications précédentes, **caractérisé en ce que** l'unité de prise d'images (5) est constituée d'au moins une caméra.

7. - Procédé pour la mesure optique en trois dimensions d'objets (2) au moyen d'un procédé de mesure topométrique, dans lequel des images de modèles de projection projetées en moyen d'un projecteur (3), sur un objet (2) sont prises par une unité de prise d'images (5) et sont analysées par une unité d'analyse d'images (6), une lampe à arc (4) étant utilisée en tant que source de lumière du projecteur (3), **caractérisé par** une synchronisation de la prise d'images et/ou de l'analyse des images avec l'intensité de la lumière de la lampe à arc (4) du projecteur (3).

8. - Procédé selon la revendication 7, **caractérisé par** une synchronisation de la prise d'images en fonction d'un signal de déclenchement de la lampe à arc (4).

9. - Procédé selon la revendication 7 ou 8, **caractérisé par** une synchronisation de la prise d'images par déclenchement de l'évolution du courant de la lampe à arc (4) en fonction du temps au moyen d'un signal de déclenchement de l'unité de prise d'images (5).

10. - Procédé selon l'une des revendications 7 à 9, **caractérisé par** une synchronisation de l'unité de prise d'images (5) avec l'intensité de la lumière de la lampe à arc (4) en fonction d'un signal de déclenchement extérieur pour l'unité de prise d'images (5) et le projecteur (3).

11. - Procédé selon l'une des revendications 7 à 10, **caractérisé par** une compensation mathématique de modifications de l'intensité de la lumière en fonction de l'instant de prise d'image enregistré précédemment dans l'évolution connue de l'intensité de la lumière en fonction du temps.
